Europäisches Patentamt

European Patent Office

Office européen des brevets

(11) Veröffentlichungsnummer: **0 264 565 B1**

(12) **EUROPÄISCHE PATENTSCHRIFT**

(45) Veröffentlichungstag der Patentschrift: **13.11.91**

(51) Int. Cl.⁵: **H04N 7/087**

(21) Anmeldenummer: **87111790.9**

(22) Anmeldetag: **14.08.87**

(54) Verfahren zum Empfangen sich periodisch wiederholender Teletextdaten.

(30) Priorität: **11.10.86 DE 3634757**

(43) Veröffentlichungstag der Anmeldung:
**27.04.88 Patentblatt 88/17**

(45) Bekanntmachung des Hinweises auf die
Patenterteilung:
**13.11.91 Patentblatt 91/46**

(84) Benannte Vertragsstaaten:
**AT BE CH DE ES FR GB IT LI LU NL SE**

(56) Entgegenhaltungen:
**EP-A- 0 037 077
EP-A- 0 190 837
GB-A- 2 146 878
US-A- 4 337 485**

**ELEKTRONIK, Band 34, Nr. 12, Juni 1985, Seiten 163-168, Munchen, DE; U. WILDHAGEN: "Teletext-multi-page-system mit TPU 2700"**

(73) Patentinhaber: **Bayerische Rundfunkwerbung GmbH
Arnulfstrasse 42
W-8000 München 2(DE)**

(72) Erfinder: **Eitz, Gerhard, Dipl.-Ing.
Welfenstrasse 2
W-8011 Poing(DE)**
Erfinder: **Koch, Herbert, Dipl.-Ing.
Am Weinstock 16
W-6200 Wiesbaden-Nordenst(DE)**
Erfinder: **Oberlies, Karl-Ulrich, Dipl.-Ing.
herderstrasse 6F
W-5600 Wuppertal 11(DE)**

(74) Vertreter: **Konle, Tilmar, Dipl.-Ing.
Benderstrasse 23 a
W-8000 München 60(DE)**

EP 0 264 565 B1

**Beschreibung**

Die Erfindung bezieht sich auf ein Verfahren gemäß dem Oberbegriff des Patentanspruchs 1. Ein derartiges Verfahren ist aus der Zeitschrift "Funkschau", Heft 6, 1985,S. 53 bis 56 bekannt.

Aus dieser Literaturstelle ist es bekannt, die im Fernsehsignal zyklisch übertragenen Teletextdaten abzutrennen und, gesammelt nach Teletextseiten, in einem Seitenzwischenspeicher zwischenzuspeichern. Da der Seitenzwischenspeicher nur eine geringe Kapazität von zwei oder vier Seiten hat, werden nur bestimmte Teletextseiten zwischengespeichert, deren Nummern zuvor vom Benutzer in einen Seitennummernspeicher eingegeben worden sind. Falls diese eingegebenen Seitennummern im Zyklus bzw. in einem betrachteten Zyklusabschnitt nicht vorhanden sind, kann die betreffende Teletextseite nicht gefunden werden, so daß sich der Suchvorgang ununterbrochen fortsetzt. Der Benutzer weiß in einem solchen Falle nicht, ob die Wartezeit zu gering war oder ob die gewünschte Teletextseite im Zyklus fehlt. Außerdem bleibt der dafür reservierte Bereich im Seitenzwischenspeicher ungenutzt. Der gleiche Nachteil tritt ein, wenn der Benutzer die "Nächste Seite"-Taste drückt, um die nächste Seite aus seiner vorprogrammierten Seitenfolge anzuzeigen.

Die Aufgabe der Erfindung besteht darin, ein Verfahren der eingangs erwähnten Art dahingehend zu verbessern, daß unnötige Wartezeiten beim Anwählen der gewünschten bzw. jeweils "nächsten" Teletextseite vermieden und sämtliche Speicherplätze des Seitenzwischenspeichers optimal genutzt werden.

Diese Aufgabe wird erfindungsgemäß durch die kennzeichnenden Merkmale des Patentanspruchs 1 gelöst, die die Suchvorgänge beim Stand der Technik wesentlich verkürzen und zusätzlich eine dauernde Belegung jedes Speicherplatzes des Seitenzwischenspeichers sicherstellen.

Vorteilhafte Weiterbildungen des erfindungsgemäßen Verfahrens ergeben sich aus den Unteransprüchen.

Nachfolgend wird die Erfindung anhand der Zeichnungen näher erläutert. Es zeigt:

Fig. 1 den Inhalt einer gesonderten Teletextseite, welche alle im Zyklus bzw. Zyklusabschnitt auftretenden Teletextseiten ausweist, wobei einzelne Seiten mit speziellen Kennungen versehen sind;

Fig. 2 eine Abfolge von Seitennummern, die ausgehend von einer momentan angewählten Seite durch Drücken spezieller Wahltasten anwählbar sind, und

Fig. 3 ein Blockschaltbild eines nach dem erfindungsgemäßen Verfahren arbeitenden Teletextempfängers.

Fig. 4 eine schematische Darstellung einer Erweiterung des Ausführungsbeispiels nach Fig. 1 mit mehreren gesonderten Teletextseiten getrennt für Seitennummern, Unterseiten (Mehrfachseiten)-Nummern und Seitentiteln und

Fig. 5 eine schematische Ansicht eines Fernsehempfängers, auf welchem die gemäß dem Ausführungsbeispiel nach Fig. 4 gewonnenen Titel zur Benutzerführung angezeigt sind.

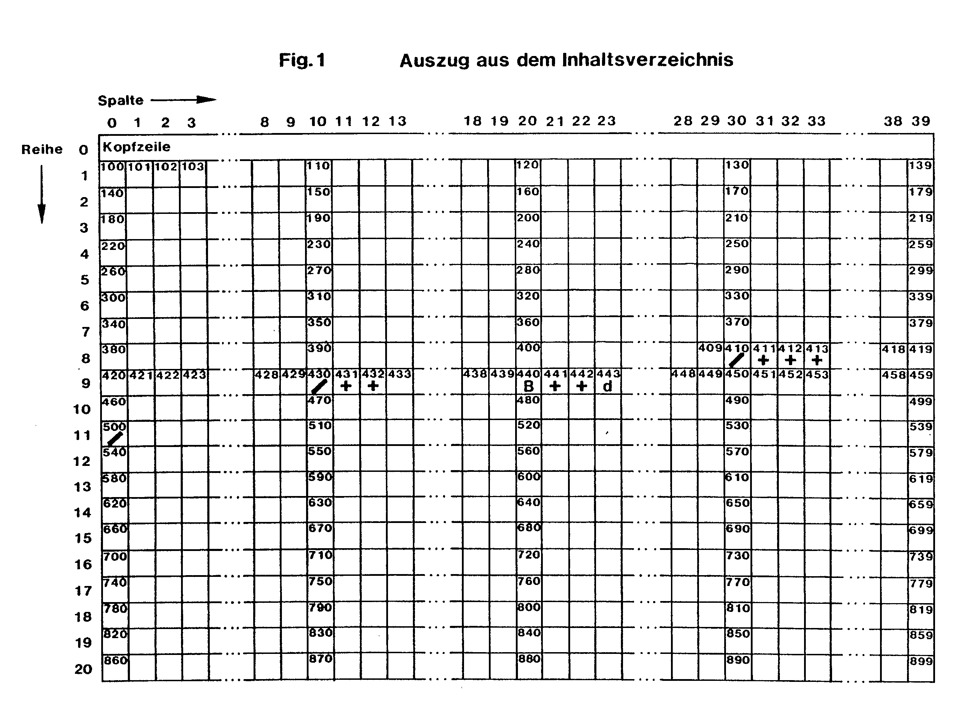

In Fig. 1 ist der Inhalt einer gesonderten Teletextseite veranschaulicht, welche gelegentlich im Zyklus übertragen wird und automatisch im empfängerseitigen Teletextdecoder angewählt und ausgelesen wird. Wie man aus Fig. 1 ersieht, sind die Nummern der in einem Teletextzyklus oder Zyklusabschnitt auftretenden Seiten (wozu auch Mehrfachseiten zählen können) in einer aus 40 Spalten und 20 Reihen bestehenden Tabelle fortlaufend aufgelistet. Dabei sind die Seitennummern #410, #430, #440, #500 mit einer Sprungkennung " / " markiert, wobei diese markierten Seiten die erste Seite einer Gruppe inhaltlich zusammengehörender Seiten, z.B. Programmhinweisseiten für einen bestimmten Kalendertag darstellen. Da die Seite #440 eine Mehrfachseite, bestehend aus den Seiten #440/1 und #440/2 ist, ist sie abweichend von den anderen Seiten des betrachteten Beispielsfalle nicht mit der Sprungkennung " / ", sondern mit der Sprungkennung "B" markiert. Im Beispiel von Fig. 1 gilt folgende, gruppenweise Ordnung:

2

EP 0 264 565 B1

| | |
|---|---|
| #410, #411, #412 | Programmhinweisseiten für den Sendetag 01.01.1987 des ARD-Programms, wobei die Einfach-seiten #411, #412 und #413 durch die Kennung "+" markiert sind. |
| #430, #431, #432 | Programmhinweisseiten für den Sendetag 02.01.1987 des ARD-Programms. |
| #440/1, #440/2, #441, #442 #443/1, #443/2, #443/3, #443/4 | Programmhinweisseiten für den Sendetag 03.01.1987 des ARD-Programms, wobei die Vielfach-seite #443 durch die Kennung "d" markiert ist. |
| #500 | Programmhinweisseite für den Sendetag 01.01.1987 des ZDF-Programms. |

Bei der Übertragung der gesonderten Teletextseite gemäß Fig. 1 werden nur diejenigen der 20 Reihen übertragen, welche Eintragungen aufweisen; d.h. im Beispielsfall von Fig. 1 werden nur die Reihen Nr. 8, Nr. 9 und Nr. 11 übertragen. Durch die matrixartige Auflistung der Tabelle gemäß Fig. 1 ergibt sich die Nummer einer Seite durch die zugeordnete Spaltennummer und die übertragene Reihennummer. Die Kennungen "+", "/", "B" und "d" werden in Klarschrift übertragen.

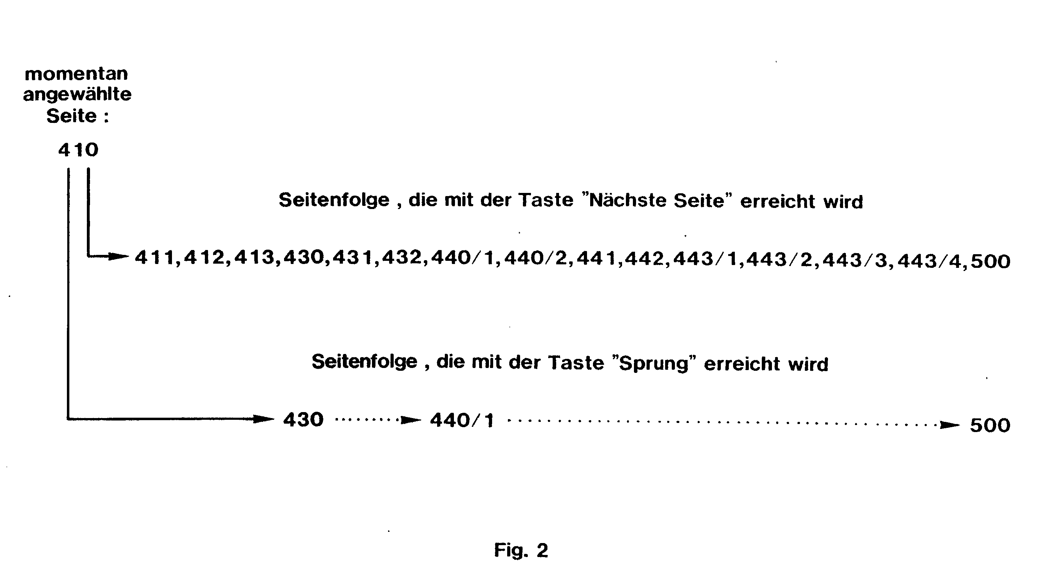

Die gruppenweise Zuordnung ermöglicht es, wie in Fig. 2 veranschaulicht ist, entweder durch Drücken einer Taste "Nächste Seite" innerhalb einer Gruppe von Programmhinweisseiten "weiterzublättern" oder durch Drücken einer Taste "Sprung" die erste Seite der nächsten Gruppe direkt anzuwählen.

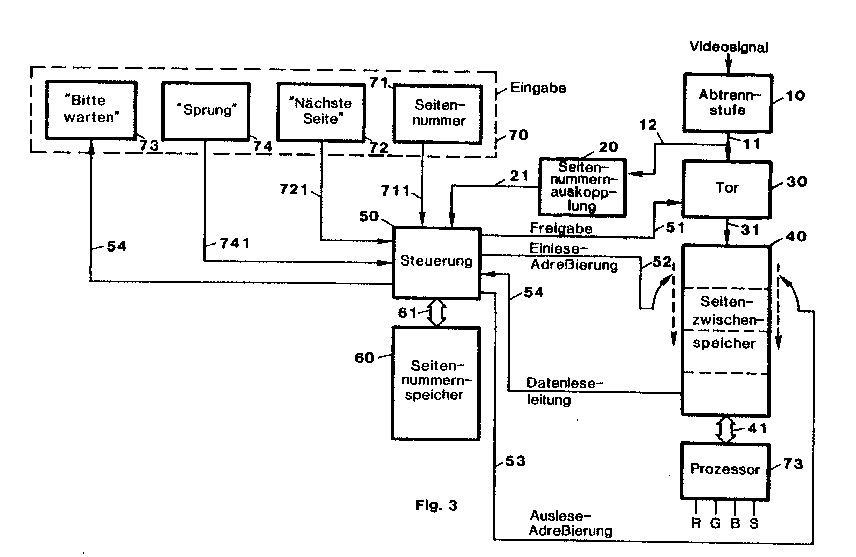

In Fig. 3 ist ein Blockschaltbild eines Teletextempfängers dargestellt, welcher nach dem erfindungsgemäßen Verfahren arbeitet. Die Teletextdaten werden in einer Abtrennstufe 10 von dem Videosignal abgetrennt und zu einzelnen Seiten zusammengestellt. Jede Seite wird über die Ausgangsleitung 11 einer Torschaltung 30 zugeführt, welche die zugeführte Seite über eine Leseleitung 31 dem Seitenzwischenspeicher 40 zuführt, falls eine noch näher zu erläuternde Steuerungsschaltung 50 auf einer Ausgangsleitung 51 der Torschaltung 30 ein Freigabesignal zuführt. Ferner bewirkt die Steuerungsschaltung 50 über eine weitere Ausgangsleitung 52 eine Adressierung des Seitenzwischenspeichers 40 für den Einlesevorgang. Der Auslesevorgang des Seitenzwischenspeichers 40 erfolgt ebenfalls unter der Steuerung der Steuerungsschaltung 50 über eine dritte Ausgangsleitung 53.

Der Steuerungsschaltung 50 werden über eine Leitung 21 von einer Seitennummern-Auskopplungsschaltung 20 die Seitennummern der auf der Leitung auftretenden Teletextseiten zugeführt. Hierzu detektiert die Auskopplungsschaltung 20 die Nummer jeder von der Leitung 11 über eine Abzweigleitung 12 zugeführten Videotextseite. Ferner ist die Steuerungsschaltung 50 mit der vom Benutzer bedienten Eingabe 70 verbunden, welche eine Tastatur 71 zur Eingabe der gewünschten Seitennummer sowie eine mit "Nächste Seite" beschriftete Taste 72 und eine weitere Taste 74 mit "Sprung" aufweist. Die gewünschte Seitennummer wird der Steuerungseinrichtung über eine Leitung 711 zugeführt, während der Befehl "Nächste Seite" bzw. "Sprung" über die Leitung 721 bzw. 741 an die Steuerungsschaltung 50 gelangt.

3

Trifft diejenige, gesonderte Seite mit den Daten für die Seitennummern ein, die im Zyklus bzw. Zyklusabschnitt auftreten, so wird sie automatisch dem Seitenzwischenspeicher 40 zugeführt. Die Daten dieser Seite werden über die Datenleseleitung 54 zu der Steuerung 50 übertragen, die Seitennummern ermittelt und in einem Seitennummernspeicher 60 abgelegt, welcher über einen bidirektionalen Bus 61 mit der Steuerungsschaltung 50 verbunden ist.

Es sei angenommen, daß der Benutzer z.B. durch Betätigen der Tastatur 71 die Seite Nummer 100 angewählt hat. Nach Betätigen der "Nächste Seite"-Taste ermittelt die Steuerungsschaltung 50 - ausgehend von der augenblicklich angewählten Seitennummer - die nächstfolgende Seitennummer im Seitennummernspeicher 60, nämlich die Seite 410 (sh. auch Fig. 1 und Fig. 2). Sobald diese Seite im Zyklus auftritt, was der Steuerungsschaltung 50 von der Auskopplungsschaltung mitgeteilt wird, erscheint auf der Ausgangsleitung 51 ein Freigabesignal für die Torschaltung 30, woraufhin die Seite 410 über die Leitung 31 in den Speicherplatz Nummer 1 des Seitenzwischenspeichers 40 abgelegt wird. Die Adressierung auf den Speicherplatz Nummer 1 erfolgt, wie bereits erwähnt, unter der Steuerung der Steuerungsschaltung 50 über die Ausgangsleitung 52. Nach erfolgtem Einlesen erzeugt die Steuerungsschaltung 50 über die Ausgangsleitung 53 einen Auslesebefehl für den Speicherplatz Nummer 1, worauf die Seite mit der Nummer 410 über den Bus 41 aus dem Seitenzwischenspeicher 40 an einen Prozessor 73 ausgelesen wird, welcher die Seite Nummer 100 als Videosignal mit den Komponenten R, G, B und S beispielsweise auf dem Bildschirm eines Fernsehempfängers darstellt.

Die Steuerungsschaltung 50 führt ferner nach erfolgtem Benutzerwunsch für die Seite Nummer 410 eine automatische Belegung der restlichen Speicherplätze Nummer 2, Nummer 3 und Nummer 4 des Seitenzwischenspeichers 40 mit den folgenden Seiten, entsprechend dem Seitennummernspeicher, durch. Als nächstfolgende Seitennummer wird im Seitennummernspeicher 60 die Seitennummer 411 angetroffen und folglich in der bereits beschriebenen Weise nach ihrem Auftreten im Zyklus auf dem Speicherplatz Nummer 2 zwischengespeichert. Entsprechend wird mit den nächsten Seiten verfahren.

Jedesmal, wenn der Benutzer durch Betätigen der Taste 72 "umblättert", wird von der Steuerungsschaltung 50 der jeweils nächste Speicherplatz ausgelesen, welcher aufgrund des vorstehend beschriebenen Einlesevorgangs mit der inhaltlich jeweils "nächsten" Seite belegt ist.

Auf diese Weise wird gewährleistet, daß der Benutzer auch zügig "umblättern" kann. Für den Fall, daß der Benutzer so rasch "umblättert", daß die betreffende nächste, im Zyklus vorhandene Seite noch nicht im Zyklus aufgetreten und im Seitenzwischenspeicher 40 abgelegt ist, kann die Steuerungsschaltung 50 über eine Leitung 54 eine Anzeige 73 an der Eingabe 70 betätigen, welche den Benutzer zum Warten auffordert.

Mit dem Betätigen der Taste 72 "Nächste Seite" wird der Speicherplatz für die bereits gelesene Seite frei, welcher anschließend mit wiederum der nächsten, im Zyklus vorhandenen und noch nicht zwischengespeicherten Seite belegt wird.

Mit Hilfe des erfindungsgemäßen Verfahrens lassen sich ferner sogenannte Mehrfachseiten leichter zwischenspeichern und auslesen. Und zwar weiß die Steuerungsschaltung 50 aus dem Seitennummernspeicher 60, ob und gegebenenfalls wieviele Mehrfachseiten im Zyklus vorhanden sind und kann dementsprechend den Such- und Ladevorgang für den Seitenzwischenspeicher 40 so beeinflussen, daß nach und nach sämtliche Seiten eines Mehrfachseitensatzes zwischengespeichert werden.

Mit Betätigen der Taste 74 "Sprung" läuft ein ähnlicher Vorgang ab, wie bei Betätigung der "Nächste Seite"-Taste.

Nach Betätigen der "Sprung"-Taste ermittelt die Steuerungsschaltung 50 - ausgehend von der augenblicklich angewählten Seitennummer - die nächstfolgende Seitennummer im Seitennummernspeicher 60, die mit einer Sprungkennung versehen ist. Wenn die betreffende Seite noch nicht im Seitenzwischenspeicher 40 vorhanden ist, erfolgt ein Einschreiben dieser Seite in den Seitenzwischenspeicher 40 sobald sie im Zyklus auftritt. Nach erfolgtem Einlesen wird die Seite auf dem Bildschirm dargestellt.

Ausgehend von dieser der Seitennummer der angesprungenen Seite erfolgt eine automatische Belegung der restlichen Speicherplätze des Seitenzwischenspeichers 40 mit den folgenden Seiten, entsprechend dem Seitennummernspeicher 60.

Es kann zweckmäßig sein, einen gewissen Bereich des Seitenzwischenspeichers 40 nur für Seiten bereit zu halten, die - ausgehend von der gerade gewählten Seitennummer - mit Betätigen der "Sprung"-Taste direkt angewählt werden können. Bei dieser Variante erfolgt eine automatische Belegung dieses speziellen Bereichs mit Seiten, die - ausgehend von der gerade gewählten Seite - mit einer Sprungkennung versehen sind. Bei Betätigen der Taste "Sprung" wird jeweils der nächste Speicherplatz aus diesem gewissen Speicherbereich ausgelesen und auf dem Bildschirm dargestellt.

Aus dem vorstehenden Zusammenhang wird deutlich, daß das erfindungsgemäße Verfahren die Kapazität des Seitenzwischenspeichers 40 von z.B. 4 oder 8 Seiten optimal nutzt und der Benutzer die Möglichkeit bekommt, bei geringster Wartezeit ein "Weiterblättern" in den Seiten eines Teletextzyklus bzw.

-abschnitts, ähnlich wie in einer Zeitschrift, durchzuführen. Mit einem Druck auf die "Sprung"-Taste kann nacheinander die jeweils erste Seite einer Gruppe inhaltlich zusammenhängender Seiten direkt angewählt werden. Durch Druck auf die Taste "Nächste Seite" können die Seiten einer Gruppe nacheinander angewählt werden.

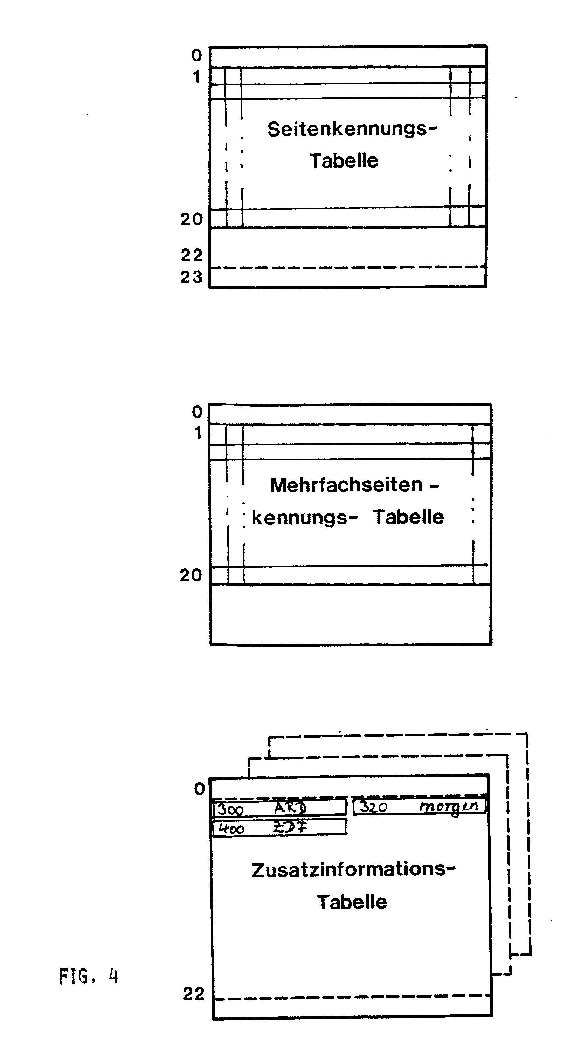

Eine Erweiterung des Ausführungsbeispiels nach Fig. 1 ist anhand von Fig. 4 veranschaulicht.

Eine gesonderte Teletextseite wird dazu verwendet, alle im Teletextzyklus oder Zyklusabschnitt auftretenden Seiten mit Kennungen zu markieren. Neben den Sprungkennungen für eine Gruppe inhaltlich zusammengehöriger Seiten (Fig. 1) wird eine weitere Sprungkennung für einen Themenbereich mit mehreren inhaltlich zusammenhängenden Gruppen benutzt. Weitere Kennungen sind für Untertitel und Programmhinweisseiten vorgesehen.

Eine zweite Teletextseite enthält Markierungen für alle momentan gesendeten Mehrfachseiten mit speziellen Kennungen für die Anzahl der Unterseiten.

Eine weitere Teletextseite wird für Zusatzinformationen benutzt, z.B. für Titel oder spezielle Codes, mit der die entsprechenden Seiten ohne Kenntnis der Seitennummer direkt angewählt werden können.

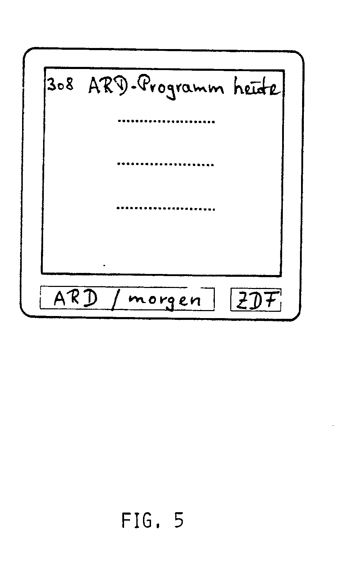

Fig. 5 zeigt beispielhaft, wie Titel aus der Zusatzinformationstabelle zur Benutzerführung vom Decoder auf den Bildschirm angezeigt werden können. Die Informationszeile zeigt links den Bereich "ARD", zu dem die gerade angewählte Seite "ARD-Programm - heute" gehört. Daneben wird die nächste Gruppe "Programm - morgen" angezeigt, die mit der Sprungtaste erreicht werden kann. Ganz rechts in der Informationszeile des Decoders wird der nächste Bereich "Programmvorschau - ZDF" angegeben, die mit Drücken der entsprechenden "Bereichstaste" direkt angesprungen werden kann.

**Patentansprüche**

1. Verfahren zum Empfangen sich in einem Zyklus oder in einem Zyklusabschnitt wiederholender Teletextdaten, welche in einem Fernsehsignal enthalten sind, bei dem die Teletextdaten von dem Fernsehsignal abgetrennt, die zu jeweils einer Teletextseite gehörenden Daten gesammelt und die so zusammengestellten Teletextseiten zwischengespeichert werden, wobei Seitennummern von Teletextseiten in einem Seitennummernspeicher abgelegt werden und die vom Benutzer angewählte Seitennummer mit den abgelegten Seitennummern verglichen wird und bei positivem Vergleichsergebnis die gewünschte Teletextseite im Zyklus bzw. Zyklusabschnitt gesucht und - falls vorhanden - nach Auffinden in einem Seitenzwischenspeicher abgespeichert wird, und wobei ferner bei Betätigen einer "Nächste Seite"-Taste der nächste Speicherplatz im Seitenzwischenspeicher angewählt und der Speicherinhalt betreffend die "Nächste Teletextseite" angezeigt wird,
   **gekennzeichnet durch**
   folgende Verfahrensschritte:

   (a) In dem Seitennummernspeicher werden die Nummern sämtlicher im Zyklus bzw. Zyklusabschnitt tatsächlich vorhandener Teletextseiten abgelegt, wobei diese Seitennummern aus einer Tabelle entnommen werden, welche als gesonderte Teletextseite übertragen und empfangen wird;
   (b) in Abhängigkeit von der Auswahl einer bestimmten Teletextseite durch den Benutzer wird durch Vergleich mit den im Verfahrensschritt (a) gespeicherten Seitennummern festgestellt, ob die Seitennummer der gewünschten Teletextseite im Zyklus bzw. einem Zyklusabschnitt tatsächlich vorhanden ist, wobei nur dann, wenn das tatsächliche Vorhandensein der Nummer der gewünschten Teletextseite festgestellt wird, der Suchvorgang eingeleitet wird, und
   (c) ausgehend von der Seitennummer der gewünschten Teletextseite wird durch weiteren Vergleich mit den im Seitennummernspeicher abgelegten Seitennummern festgestellt, ob jeweils die im Zyklus bzw. Zyklusabschnitt numerisch folgende Seitennummer tatsächlich vorhanden ist, wobei nur dann, wenn das tatsächliche Vorhandensein der betreffenden Seitennummer festgestellt wird, der Suchvorgang eingeleitet und die gefundene Teletextseite im nächstfolgenden Speicherplatz des Seitenzwischenspeichers abgelegt wird, welche bei Betätigen der "Nächste Seite"-Taste angezeigt wird.

2. Verfahren nach Anspruch 1, **dadurch gekennnzeichnet,** daß im Fall des Auftretens von Mehrfachseiten im Zyklus bzw. Zyklusabschnitt deren Unterseitennummern als Tabelle innerhalb einer weiteren gesonderten Teletextseite übertragen werden.

3. Verfahren nach Anspruch 1 oder 2, **gekennzeichnet durch** folgende weitere Verfahrensschritte:

   (d) Sprungkennungen, welche jeweils die Seitennummer der ersten Seite einer zugeordneten Gruppe von Teletextseiten markieren, werden in die Tabelle aufgenommen, empfangen und zwischengespeichert, und

(e) in Abhängigkeit von der Auswahl einer gewünschten Teletextseite durch den Benutzer wird auf einen Sprungbefehl des Benutzers die nächste durch eine Sprungkennung besonders markierte Seitennnummer im Zyklus gesucht und die betreffende Teletextseite nach Abspeicherung angezeigt.

4. Verfahren nach Anspruch 3, **gekennzeichnet durch** folgenden weiteren Verfahrensschritt:

(f) Ausgehend von der Seitennummer der gewünschten Teletextseite werden die nächsten, durch eine Sprungkennung besonders markierten Seitennummern im Zyklus bzw. Zyklusabschnitt automatisch gesucht, auf den freien Speicherplätzen zwischengespeichert und auf einen Sprungbefehl des Benutzers wiedergegeben.

5. Verfahren nach einem der Ansprüche 1 bis 4, **dadurch gekennzeichnet,** daß innerhalb einer dritten, gesonderen Teletextseite zumindest für einen Teil der in der ersten Tabelle übertragenen Seitennummern zugehörige Titel in Klarschrift übertragen werden, welche bei Auswahl der betreffenden Seitennummer wiedergegeben werden.

## Claims

1. Method for receiving teletext data repeating in a cycle or in a cycle section which data are contained in a television signal in which the teletext data are separated from the television signal, the data belonging respectively to one teletext page are collected and the teletext pages so combined are intermediately stored whereby page numbers of teletext pages are filed in a page number storer and the page number selected by the user is compared with the filed page numbers and with positive comparison result the desired teletext page in the cycle or cycle section is searched for and - if present - after finding is stored in a page intermediate storer and whereby furthermore on operating a "next page" key the next storage place in the page intermediate storer is selected and the storer content concerning the "next teletext page" is indicated,
characterised by
the following method steps:

a) in the page number storer the numbers of all teletext pages actually present in the cycle or cycle section are filed whereby these page numbers are removed from a table which is transmitted and received as special teletext page;
b) in dependence on the choice of a certain teletext page by the user it is determined by comparison with the page numbers stored in the method step a) whether the page number of the desired teletext page is actually present in the cycle or a cycle section whereby only then when the actual presence of the number of the desired teletext page is ascertained is the searching procedure initiated and
c) proceeding from the page number of the desired teletext page, by further comparison with the page numbers filed in the page number storer it is ascertained whether the numerically following page number is actually present in the cycle or cycle section whereby only when the actual presence of the page number concerned is ascertained is the searching procedure initiated and the teletext page found, is filed in the next following storage place of the page intermediate storer which is indicated upon operation of the "Next Page" key.

2. Method according to claim 1, characterised in that in the case of the appearance of multiple pages in the cycle or cycle section their sub page numbers are transmitted as a table within a further separate teletext page.

3. Method according to claim 1 or 2, characterised by the following further method steps:

d) Jump identifications which mark respectively the page number of the first page of an associated group of teletext pages are taken up, received and intermediately stored in the table and
e) in dependence on the choice of a desired teletext page by the user, on a jump command of the user the next page number especially marked by a jump identification is searched for in the cycle and indicates the teletext page concerned after storing.

4. Method according to claim 3, characterised by the following further method steps:

f) Proceeding from the page number of the desired teletext page the next page numbers especially marked by a jump identification are automatically searched for in the cycle or cycle section, intermediately stored on the free storage places and reproduced upon a jump command of the user.

5. Method according to one of the claims 1 to 4, characterised in that within a third separate teletext page at least for a part the title appertaining to the page numbers transmitted in the first table are transmitted in ordinary writing which are reproduced upon selection of the page number concerned.

**Revendications**

1. Procédé de réception de données de télétexte qui se répètent en un cycle ou en une partie de cycle et qui sont contenues dans un signal de télévision, dans lequel les données de télétexte sont séparées du signal de télévision; les données appartenant respectivement à une page de télétexte sont rassemblées et les pages de télétexte ainsi assemblées sont mémorisées temporairement dans un tampon, des numéros de pages de télétexte étant mémorisées dans un tampon de numéro de page et le numéro de page choisi par un utilisateur étant comparé avec les numéros de page mémorisés et la page de télétexte souhaitée étant, en cas de résultat positif de la comparaison, recherchée dans le cycle ou la partie de cycle et - si elle est présente - mémorisée, après avoir été trouvée, dans un tampon de page, et dans lequel, en outre, lors de l'actionnement d'une touche "page suivante", l'emplacement suivant de mémorisation est choisi dans le tampon de pages et le contenu de la page concernant la "page de télétexte suivante" est affiché,

    **caractérisé par**

    les étapes de procédés suivantes:

(a) dans la mémoire de numéros de pages sont mémorisés les numéros de toutes les pages de télétexte réellement présentes dans le cycle ou la partie de cycle, ces numéros de pages étant prélevés dans un tableau qui est transféré et reçu en tant que pages de télétexte séparées.

(b) en fonction du choix d'une page de télétexte définie par l'utilisateur, il est déterminé par comparaison avec les numéros de pages mémorisés dans l'étape de procédé (a) si le numéro de page de la page de télétexte souhaitée est réellement présent dans le cycle ou la partie de cycle, le processus de recherche étant amorcé seulement quand a été déterminée la présence réelle du numéro de la page de télétexte souhaitée.

(c) en partant du numéro de page de la page de télétexte souhaitée, il est déterminé par une autre comparaison avec les numéros de pages mémorisés dans le tampon de numéro de pages si le numéro de page numériquement suivant dans le cycle ou la partie de cycle est réellement présente, le processus de recherche n'étant amorcé et la page de télétexte trouvée n'étant mémorisé à l'emplacement de mémoire immédiatement suivant dans le tampon de pages qui est affiché par actionnement de la touche "page suivante" que si la présence réelle du numéro de pages concerné a été déterminée.

2. Procédé selon la revendication 1, caractérisé en ce que, s'il apparaît des pages multiples dans le cycle ou la partie de cycle, leurs numéros de sous-pages sont transférés en tant que tableaux à l'intérieur d'une autre page de télétexte séparée.

3. Procédé selon la revendication 1 ou 2, caractérisé par les étapes de procédés additionnelles suivantes :
(d) des indicatifs de transfert, qui marquent respectivement le numéro de page de la première page d'un groupe associé de pages de télétexte sont recueillis dans le tableau, reçus et mémorisées en tampon en fonction du choix d'une page reçue et mémorisée en tampon,
(e) en fonction du choix d'une page de télétexte souhaitée par l'utilisateur, le numéro de page marqué particulièrement par un indicatif de transfert recherché est, sur ordre de transfert de l'utilisateur, recherché dans le cycle et la page de télétexte choisie est affichée après mémorisation.

4. Procédé selon la revendication 3, caractérisé par l'étape de procédé additionnelle suivante :
(f) En partant du numéro de page de la page de télétexte choisie, les numéros de pages suivants, marqués spécialement par un indicatif de transfert, sont recherchés automatiquement dans le cycle ou la partie de cycle, mémorisés en tampon sur les emplacements libres de mémoires et sont reproduits sur ordre de transfert de l'utilisateur.

5. Procédé selon l'une des revendications 1 à 4, caractérise en ce que le titre correspondant à des pages transférées dans le premier tableau, qui sont reproduites lors du choix du numéro de pages correspondant, est transféré en clair, au moins en partie, à l'intérieur d'une troisième page de télétexte séparée.

# Fig. 1 Auszug aus dem Inhaltsverzeichnis

Spalte →

| Reihe | 0 | 1 | 2 | 3 | 8 | 9 | 10 | 11 | 12 | 13 | 18 | 19 | 20 | 21 | 22 | 23 | 28 | 29 | 30 | 31 | 32 | 33 | 38 | 39 |
|---|---|---|---|---|---|---|---|---|---|---|---|---|---|---|---|---|---|---|---|---|---|---|---|---|
| 0 | Kopfzeile | | | | | | | | | | | | | | | | | | | | | | | |
| 1 | 100 | 101 | 102 | 103 | | | 110 | | | | | | 120 | | | | | | 130 | | | | | 139 |
| 2 | 140 | | | | | | 150 | | | | | | 160 | | | | | | 170 | | | | | 179 |
| 3 | 180 | | | | | | 190 | | | | | | 200 | | | | | | 210 | | | | | 219 |
| 4 | 220 | | | | | | 230 | | | | | | 240 | | | | | | 250 | | | | | 259 |
| 5 | 260 | | | | | | 270 | | | | | | 280 | | | | | | 290 | | | | | 299 |
| 6 | 300 | | | | | | 310 | | | | | | 320 | | | | | | 330 | | | | | 339 |
| 7 | 340 | | | | | | 350 | | | | | | 360 | | | | | | 370 | | | | | 379 |
| 8 | 380 | | | | | | 390 | | | | | | 400 | | | | 409 | 410 | 411 | 412 | 413 | | 418 | 419 |
| | | | | | | | | | | | | | | | | | | ╱ | + | + | + | | | |
| 9 | 420 | 421 | 422 | 423 | 428 | 429 | 430 | 431 | 432 | 433 | 438 | 439 | 440 | 441 | 442 | 443 | 448 | 449 | 450 | 451 | 452 | 453 | 458 | 459 |
| | | | | | | | ╱ | + | + | | | | B | + | + | d | | | ╱ | | | | | |
| 10 | 460 | | | | | | 470 | | | | | | 480 | | | | | | 490 | | | | | 499 |
| 11 | 500 | | | | | | 510 | | | | | | 520 | | | | | | 530 | | | | | 539 |
| | ╱ | | | | | | | | | | | | | | | | | | | | | | | |
| 12 | 540 | | | | | | 550 | | | | | | 560 | | | | | | 570 | | | | | 579 |
| 13 | 580 | | | | | | 590 | | | | | | 600 | | | | | | 610 | | | | | 619 |
| 14 | 620 | | | | | | 630 | | | | | | 640 | | | | | | 650 | | | | | 659 |
| 15 | 660 | | | | | | 670 | | | | | | 680 | | | | | | 690 | | | | | 699 |
| 16 | 700 | | | | | | 710 | | | | | | 720 | | | | | | 730 | | | | | 739 |
| 17 | 740 | | | | | | 750 | | | | | | 760 | | | | | | 770 | | | | | 779 |
| 18 | 780 | | | | | | 790 | | | | | | 800 | | | | | | 810 | | | | | 819 |
| 19 | 820 | | | | | | 830 | | | | | | 840 | | | | | | 850 | | | | | 859 |
| 20 | 860 | | | | | | 870 | | | | | | 880 | | | | | | 890 | | | | | 899 |

EP 0 264 565 B1

**momentan
angewählte
Seite :**

**410**

Seitenfolge , die mit der Taste "Nächste Seite" erreicht wird

**411,412,413,430,431,432,440/1,440/2,441,442,443/1,443/2,443/3,443/4,500**

Seitenfolge , die mit der Taste "Sprung" erreicht wird

**430** ········► **440/1** ···································· ► **500**

**Fig. 2**

EP 0 264 565 B1

Fig. 3

**0**
**1**

Seitenkennungs-

Tabelle

**20**

**22**

**23**

**0**
**1**

Mehrfachseiten –

kennungs- Tabelle

**20**

**0**

| 300 | ARD | | 320 | morgen |
| 400 | ZDF | | | |

Zusatzinformations-

Tabelle

FIG. 4

**22**

FIG. 5